# EUROPÄISCHE PATENTSCHRIFT

(11) **EP 3 713 800 B1**
(45) Veröffentlichungstag und Bekanntmachung des Hinweises auf die Patenterteilung: **10.01.2024**
(21) Anmeldenummer: 18811739.4
(22) Anmeldetag: 20.11.2018
(51) Int. Cl.: B60T 7/12, B60T 8/17, B60T 8/32, B60T 13/26, B60T 13/36

(54) **BREMSSYSTEM UND VERFAHREN ZUM ANSTEUERN EINER BREMSE IN DEM BREMSSYSTEM**
BRAKING SYSTEM AND METHOD FOR CONTROLLING A BRAKE IN THE BRAKING SYSTEM
SYSTÈME DE FREINAGE ET PROCÉDÉ SERVANT À PILOTER UN FREIN DANS LE SYSTÈME DE FREINAGE

(30) Priorität: 22.11.2017 DE 102017220893
(43) Veröffentlichungstag der Anmeldung: 30.09.2020
(73) Patentinhaber: KNORR-BREMSE Systeme für Schienenfahrzeuge GmbH, 80809 München (DE)
(72) Erfinder: SCHMIDT, Maximilian, 80797 München (DE); LOUCA, Sebastian, 80799 München (DE)
(86) Internationale Anmeldenummer: PCT/EP2018/081854
(87) Internationale Veröffentlichungsnummer: WO 2019/101712

(56) Entgegenhaltungen:
- CN-A- 107 107 889
- US-A1- 2013 338 860
- US-A1- 2015 130 267

## Beschreibung

Die Erfindung betrifft ein Bremssystem nach Ansprüche 1 und 3, insbesondere ein Bremssystem für ein Schienenfahrzeug, in dem eine Notbremssituation auftreten kann, und ein Verfahren nach Anspruch 9 zum Ansteuern einer Bremse in dem Bremssystem nach Anspruch 3.

In Bremssystemen von Schienenfahrzeugen werden Bremsen durch ein Fluid, meist durch Druckluft, betrieben, wobei ein Versorgungsdruck in einem Druckluftsystem des Bremssystems durch Ventile auf einen gewünschten Bremszylinderdruck eingestellt, also gegebenenfalls reduziert, wird, um die Bremsen zu aktivieren. Bei einer Inbetriebnahme wird der zug-weite durchschnittliche Reibungskoeffizient zwischen Bremsscheibe und Bremsbelag ermittelt und eine notwendige Zielverzögerung wird einmalig manuell an den Ventilen eingestellt. Lokale Unterschiede in den Reibungskoeffizienten, also unterschiedliche Reibungskoeffizienten einzelner Bremsen oder Bremsengruppen, die zu Toleranzen in einer zug-weiten Verzögerung und zu lokalen Überschreitungen der erlaubten Kraftschlussausnutzung zwischen Rad und Schiene führen, werden dabei nicht berücksichtigt. Der Nachweis erfolgt über Zulassungsfahrten für jede Reibpaarung, wobei die Reibpaarungen vor den Zulassungsfahrten konditioniert bzw. eingefahren werden müssen. Der gesamte Vorgang der Zulassungsfahrten ist sehr aufwändig und kostenintensiv.

Bei einem Festlegen der Zielverzögerung in dem Bremssystem gilt es jedoch zu beachten, dass es aufgrund eines sich verändernden Reibungskoeffizienten zwischen Bremsbelägen und Bremsscheiben bei einem gleichen Bremszylinderdruck zu unterschiedlichen Verzögerungen kommen kann.

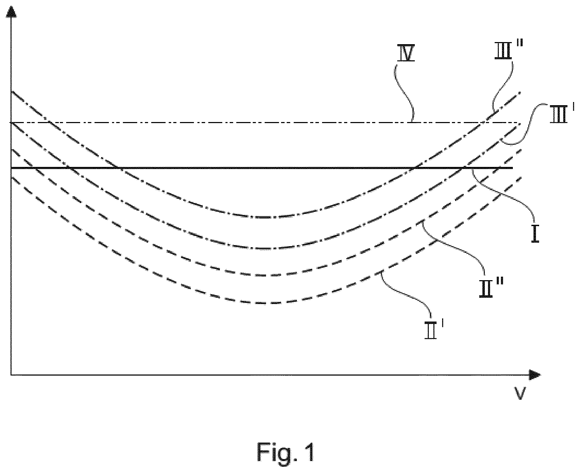

In **Fig. 1** ist ein Diagramm gezeigt, das ein Verhalten von Reibungskoeffizienten darstellt. In dem Diagramm ist auf der Abszisse eine Geschwindigkeit v eines Schienenfahrzeugs aufgetragen und auf der Ordinate sind Verläufe eines Nominaldrucks I, der Reibungskoeffizienten II', II" von unterschiedlichen Bremsen, von sich einstellenden Verzögerungen III', III" und von einer maximal zulässigen Haftwertausnutzung IV über der Geschwindigkeit aufgetragen.

Unter der Annahme, dass über einen gesamten Geschwindigkeitsbereich ein konstanter Nominaldruck I anliegt, der mit einer durchgezogenen Linie dargestellt ist, ergeben sich daraus in Verbindung mit dem mit einer gestrichelten Linie qualitativ dargestellten Reibungskoeffizientenverlauf II' die Verzögerung III' und mit dem Reibungskoeffizientenverlauf II" die Verzögerung III". Aus dem Diagramm ist zu erkennen, dass die Reibungskoeffizienten II', II" von unterschiedlichen Bremsen qualitativ gleich, nämlich in einem niedrigen und einem hohen Geschwindigkeitsbereich relativ hoch und in einem mittleren Geschwindigkeitsbereich relativ niedrig, sind. Die Reibungskoeffizienten II', II" der unterschiedlichen Bremsen können sich aber bei dem gleichen Nominaldruck I quantitativ unterscheiden.

Die maximal zulässige Haftwertausnutzung IV darf als ein Verzögerungsgrenzwert durch die Verzögerung III', III" nicht überschritten werden, um so beispielsweise ein Blockieren eines von der Bremse gebremsten Rads zu verhindern. Aus dem Diagramm ist zu erkennen, dass die Verzögerung III', die sich aus dem Reibungskoeffizientenverlauf II' ergibt, die maximal zulässige Reibwertausnutzung IV bei dem Nominaldruck I im dem gesamten Geschwindigkeitsbereich nicht überschreitet. Andererseits überschreitet die auf dem Reibungskoeffizientenverlauf II" beruhende Verzögerung III" bei dem Nominaldruck I die maximal zulässige Haftwertausnutzung IV im niedrigen und hohen Geschwindigkeitsbereich. Aus diesem Grund ist es eigentlich nicht zulässig, die Bremse mit dem Reibungskoeffizientenverlauf II" mit dem Nominaldruck I zu betreiben, Aus diesem Grund wäre der Nominaldruck I für die Bremse mit dem Reibungskoeffizientenverlauf II" zu verringern. Wenn der Nominaldruck jedoch übermäßig stark verringert wird, um sicherzustellen, dass die maximale Haftwertausnutzung nicht überschritten wird, wird der Druck gering, so dass die Gefahr besteht, dass eine ausreichende Verzögerung in dem mittleren Geschwindigkeitsbereich bei den niedrigen Reibungskoeffizienten nicht erreicht wird. In der Vergangenheit wurden deshalb nur die zug-weite Verzögerung und die zug-weite Haftwertausnutzung beurteilt und lokale Abweichungen wurden toleriert.

Während einer Servicebremsung des Schienenfahrzeugs, also einer Bremsung im normalen Betrieb, besteht heute die Möglichkeit, dass der Bremszylinderdruck in Abhängigkeit von der Geschwindigkeit so geregelt wird, dass er im niedrigen und hohen Geschwindigkeitsbereich geringer als im mittleren Geschwindigkeitsbereich ist, so dass die vom Bremszylinderdruck und von dem Reibungskoeffizienten abhängige Verzögerung annähernd konstant ist.

Es treten jedoch in den Bremssystemen von Schienenfahrzeugen Störungsfälle, in denen ein Stromausfall auftreten kann, und Notbremssituationen auf. In solchen Fällen werden Magnetventile für eine Ansteuerung von Bremszylindern stromlos geschaltet, wodurch die Magnetventile auf Durchgang geschaltet werden. Dadurch wird ein in dem Druckluftsystem vorhandener nominaler Bremszylinderdruck auf die Bremszylinder aufgebracht, ohne dass ein Herunterregeln im niedrigen und hohen Geschwindigkeitsbereich möglich ist.

Dokument US 2013/338860 A1 offenbart ein Bremssystem für ein Schienenfahrzeug mit einer Steuerungseinheit zum Ansteuern einer zugeordneten Bremse, wobei die Steuerungseinheit die Bremse mit einem basierend auf einer bremsenspezifischen Einflussgröße übersetzten Bremszylinderdruck ansteuert.

In Dokument US 2015/130267 A1 ist eine Steuerventileinrichtung für eine Schienenfahrzeugbremse offenbart, bei der in einem unbestromten Zustand ein Druck von einem Druckluftreservoir, der eventuell von einer Ventileinrichtung begrenzt wird, an ein Relaisventil weitergeleitet wird, um eine zugeordnete Bremse basierend auf dem gegebenenfalls begrenzten Druckluftreservoir-Druck anzusteuern.

Daraus ergibt sich die Aufgabenstellung, ein Bremssystem bereitzustellen, das ein Einhalten von Verzögerungsgrenzwerten auch in einem Störungsfall mit einem Stromausfall oder in einer Notbremssituation berücksichtigt.

Die Aufgabe wird durch ein Bremssystem gemäß Anspruch 1 und ein Verfahren gemäß Anspruch 13 gelöst. Vorteilhafte Weiterentwicklungen sind Gegenstand der abhängigen Ansprüche.

Durch eine Bereitstellung eines erfindungsgemäßen Bremssystems für ein Schienenfahrzeug mit einer Steuerungseinheit mit einer Speichereinrichtung ist es möglich, eine bremsenspezifische Einflussgröße auf eine Verzögerung als eine Einflussgröße, also quasi einen Korrekturfaktor, für eine zugeordnete Bremse robust zu speichern. In dieser bremsenspezifischen Einflussgröße können konstante Einflüsse des Bremssystems eingerechnet werden. Robust bedeutet in diesem Zusammenhang, dass die Einflussgröße auch bei einem Stromausfall gespeichert bleibt und abrufbar ist, so dass es möglich ist, ein Bremsen auch bei einem Stromausfall unter Berücksichtigung der bremsenspezifischen Einflussgröße durchzuführen, um die Verzögerungsgrenzwerte einzuhalten.

Wenn die Speichereinrichtung vorteilhafterweise als eine fluidtechnische oder mechanische Speichereinrichtung ausgebildet ist, ist es einfach möglich, die Einflussgröße robust zu speichern.

Das Bremssystem ist in einer Ausführungsform mit der fluidtechnischen Speichereinrichtung vorteilhafterweise mit einem absperrbaren Fluidleitungsabschnitt als Speichereinrichtung versehen. In dem absperrbaren Fluidleitungsabschnitt ist ein Fluiddruck basierend auf der Einflussgröße in dem Fluidleitungsabschnitt als nominaler Vorsteuerdruck speicherbar. Der Fluiddruck ist dabei in Abhängigkeit von der Einflussgröße einfach veränderbar. Das Bremssystem steuert dann die zugeordnete Bremse basierend auf dem eingesperrten nominalen Vorsteuerdruck an, um die Verzögerungsgrenzwerte einzuhalten.

In einer vorteilhaften Weiterbildung des Bremssystems ist ein Drucksensor in dem absperrbaren Fluidleitungsabschnitt vorgesehen. Durch diesen Drucksensor ist es möglich, den nominalen Vorsteuerdruck in dem absperrbaren Fluidleitungsabschnitt nicht nur über eine Vorwärtssteuerung einzustellen, sondern den vorbestimmten Vorsteuerdruck genau zu regeln, um die Verzögerungsgrenzwerte einzuhalten.

Wenn der absperrbare Fluidleitungsabschnitt vorteilhafterweise mit einem Druckübersetzer verbunden ist, kann der nominale Vorsteuerdruck in einen nominalen Bremszylinderdruck übersetzt werden, wobei der nominalen Bremszylinderdruck für jede der zugeordneten Bremsen oder Bremsengruppen unterschiedlich sein kann. Der nominale Bremszylinderdruck ist hier ein maximaler Bremszylinderdruck, der, unter Berücksichtigung der bremsenspezifischen Einflussgrößen, ein Überschreiten der Verzögerungsgrenzwerte verhindert, selbst wenn er direkt in einen Bremszylinder eingeleitet wird.

Das Bremssystem ist in einer alternativen Ausführungsform vorteilhafterweise mit einer Speichereinrichtung mit einem mechanischen Stellglied versehen. Durch das mechanische Stellglied ist es möglich, die bremsenspezifische Einflussgröße einfach und robust zu speichern. Die zugeordnete Bremse ist dann entsprechend einer die bremsenspezifische Einflussgröße berücksichtigenden Stellung des mechanischen Stellglieds über eine mechanisch einstellbare Druckregeleinheit und einen Druckübersetzer einfach anzusteuern.

Wenn die mechanisch einstellbare Druckregeleinheit vorteilhafterweise auf dem Prinzip eines Waagebalkensystems funktioniert, können sowohl eine bremsenspezifische Einflussgröße als auch andere Einflussgrößen einfach berücksichtigt werden.

Vorteilhafterweise ist das Bremssystem in einer Verbindungsleitung zwischen dem Druckübersetzer und der zugeordneten Bremse mit einem Druckregler versehen. Der Druckregler kann den nominalen Bremszylinderdruck des Druckübersetzers in Abhängigkeit von einer Bremsanforderung bei einer Servicebremsung einfach in einen aktuell erforderlichen Bremszylinderdruck umwandeln. Im Falle eines Notbremssignals oder bei einem Stromausfall wird der Druckregler einfach so geschaltet, dass der nominale Bremszylinderdruck zu der zugeordneten Bremse weitergeleitet wird, um eine maximale Verzögerung unter Berücksichtigung der Einflussgröße zu erzielen.

Wenn das Bremssystem vorteilhafterweise einen Signaleingang aufweist, über den ein Ausmaß einer Last aufgrund eines Beladungszustands, also eines Gewichts eines Abschnitts des Schienenfahrzeugs, in das Bremssystem eingegeben werden kann, kann neben der bremsenspezifischen Einflussgröße auch eine Einflussgröße, die sich beispielsweise aufgrund des Gewichts einer Ladung oder von transportierten Personen ändert, einfach berücksichtigt werden.

Die bremsenspezifische Einflussgröße enthält vorteilhafterweise eine auf einem geschwindigkeitsabhängigen Reibungskoeffizientenverlauf basierende Einflussgröße. Dadurch kann der nominale Bremszylinderdruck über den Druckübersetzer so gewählt werden, dass eine von einem vorbestimmten Reibungskoeffizienten abhängige Haftwertausnutzung zwischen Rad und Schiene möglichst gerade nicht überschritten wird. Somit ist die Möglichkeit gegeben, dass eine Verzögerung in einem mittleren Geschwindigkeitsbereich so groß wie möglich wird, ohne die Haftwertausnutzung zu überschreiten.

Das Bremssystem ist vorteilhafterweise mit mehreren Bremsen und mit mehreren Steuerungseinheiten, die jeweils mindestens einer der Bremsen zugeordnet ist, versehen. Durch das Vorsehen von mehreren Steuerungseinheiten kann die jeweils gespeicherte bremsenspezifische Einflussgröße für eine einzelne Bremse oder eine Gruppe von wenigen Bremsen, beispielsweise eines Drehgestells genutzt werden. Bei einem Einstellen der Ansteuerung der Bremsen ist es erforderlich, den nominalen Bremszylinderdruck so niedrig zu wählen, dass auch die Verzögerung der Bremse mit dem höchsten Reibungskoeffizienten die Haftwertausnutzung nicht überschreitet. Aus diesem Grund ist es möglich, dass mehrere andere Bremsen mit einem niedrigeren Reibungskoeffizienten durch denselben niedrigen nominalen Bremszylinderdruck einen zu geringen Beitrag an einer gesamten Verzögerung bringen, so dass eine erforderliche gesamte Verzögerung nicht erreicht werden kann. Deshalb ist es vorteilhaft, eine Gruppe von durch eine Steuerungseinheit angesteuerten Bremsen möglichst klein zu wählen, so dass ein durch die Bremse mit dem höchsten Reibungskoeffizienten bedingter geringer nominaler Bremszylinderdruck auf möglichst wenige Bremsen wirkt. Somit können die verbleibenden Bremsen mit einem höheren Bremszylinderdruck angesteuert werden, so dass die gesamte Verzögerung möglichst groß ist.

In einer vorteilhaften Weiterbildung des Bremssystems ist es mit einer Erfassungseinheit zur Erfassung eines aktuellen Reibungskoeffizienten der Bremse oder der Bremsen versehen. Mit dieser Erfassungseinheit kann der aktuelle Reibungskoeffizient einmalig oder periodisch einfach erfasst werden.

Durch ein Bereitstellen eines erfindungsgemäßen Verfahrens, in dem die bremsenspezifische Einflussgröße auf eine Verzögerung des Schienenfahrzeugs gespeichert wird, ist es möglich, dass die zugeordnete Bremse bei einem Vorliegen eines Notbremssignals oder eines Stromausfalls mit dem auf der bremsenspezifischen Einflussgröße basierenden nominalen Bremszylinderdruck angesteuert wird, so dass in diesen Fällen die Haftwertausnutzung nicht überschritten wird. Im Fall der Servicebremsung kann der nominale Bremszylinderdruck entsprechend eines Servicebremssignals modifiziert werden, so dass die gewünschte Verzögerung erreicht wird, die Haftwertausnutzung aber ebenfalls nicht überschritten wird.

In einer vorteilhaften Weiterbildung des Verfahrens, in dem das Speichern der bremsenspezifischen Einflussgröße periodisch erfolgt, ist es möglich, beispielsweise auf sich ändernde Umgebungsbedingungen, wie etwa eine Umgebungstemperatur oder Nässe auf der Schiene oder der Bremsscheibe zu reagieren. Außerdem kann sich dadurch ein Aufwand bei Zulassungsfahrten reduzieren, da eine Konditionierung bzw. ein Einfahren von Reibpaarungen (Bremsbelag / Bremsscheibe / Rad) vor den Zulassungsfahrten entfällt. Darüber hinaus ist es möglich, die Zulassungsfahrten für verschiedene Reibpaarungen zu minimieren.

Wenn vorteilhafterweise die Einflussgröße durch eine Überlagerung der bremsenspezifischen Einflussgröße und einer lastspezifischen Einflussgröße in Abhängigkeit von dem Ausmaß der Last aufgrund eines Gewichts des Schienenfahrzeugs gespeichert wird, kann der nominale Bremszylinderdruck auch einfach lastkorrigiert, also in Abhängigkeit von dem Wagengewicht eingestellt werden.

Durch das vorteilhafte robuste Speichern der Einflussgröße durch das Einsperren eines vorbestimmten Fluiddrucks als nominaler Vorsteuerdruck in einem absperrbaren Fluidleitungsabschnitt und das Übersetzen in den nominalen Bremszylinderdruck kann das Überschreiten der Haftwertausnutzung sowohl im Falle des Notbremssignals oder bei Stromausfall als auch bei der Servicebremsung verhindert werden.

Durch das vorteilhafte robuste Speichern der Einflussgröße durch das Einstellen einer auf der Einflussgröße beruhenden vorbestimmten Stellung des Stellglieds und das Übersetzen in den nominalen Bremszylinderdruck kann das Überschreiten der Haftwertausnutzung sowohl im Falle des Notbremssignals oder bei dem Stromausfall als auch bei der Servicebremsung verhindert werden.

Wenn die bremsenspezifische Einflussgröße vorteilhafterweise einen geschwindigkeitsabhängigen Reibungskoeffizientenverlauf mit vorbestimmten geschwindigkeitsabhängigen Reibungskoeffizienten enthält, kann der Einfluss des Reibungskoeffizientenverlaufs der zugeordneten Bremsen auf die Verzögerung in jeder der Steuerungseinheiten berücksichtigt werden. Somit kann der nominale Bremszylinderdruck so gewählt werden, dass die Haftwertausnutzung nicht überschritten wird.

In einer weiteren vorteilhaften Weiterbildung des Verfahrens, in der aktuelle Reibungskoeffizienten der Bremse als vorbestimmte Reibungskoeffizienten erfasst werden, kann sich dadurch der Aufwand bei Zulassungsfahrten reduzieren, da die Konditionierung bzw. das Einfahren von Reibpaarungen (Bremsbelag / Bremsscheibe / Rad) vor den Zulassungsfahrten entfällt. Außerdem ist es möglich, die Zulassungsfahrten für verschiedene Reibpaarungen zu minimieren.

Wenn mehrere Bremsen oder Bremsengruppen vorhanden sind, wird der aktuelle Reibungskoeffizient vorteilhafterweise für eine einzelne der Bremsen oder eine einzelne der Bremsengruppen erfasst. Dadurch ist es möglich, die maximal zulässige Reibwertausnutzung im Falle der Notbremsung oder des Stromausfalls nicht nur zugweit, sondern lokal einzuhalten. Dadurch kann eine zug-weite Toleranz der Verzögerung auch bei dem Stromausfall bzw. Spannungsverlust reduziert werden. Schließlich ist auch die Verwendung verschiedener Reibpaarungen in dem Schienenfahrzeug ohne gesonderte Zulassungsfahrten möglich.

Die Erfindung wird nun anhand eines Ausführungsbeispiels unter Bezugnahme auf die beigefügten Zeichnungen erläutert.

Insbesondere zeigt
- Fig. 1: ein Diagramm, das ein Verhalten von Reibungskoeffizienten darstellt;
- Fig. 2: einen schematischen Aufbau eines erfindungsgemäßen Bremssystems in einer ersten Ausführungsform;
- Fig. 3: einen schematischen Aufbau einer Steuerungseinrichtung eines erfindungsgemäßen Bremssystems in einer zweiten Ausführungsform; und
- Fig. 4: eine schematische Darstellung eines Beispiels für eine Druckregeleinheit mit einer mechanischen Speichereinrichtung.

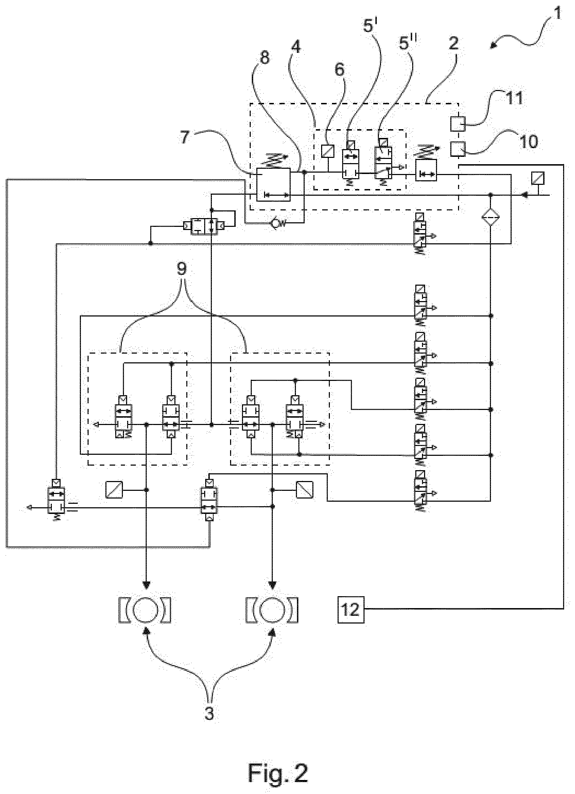

In **Fig. 2** ist ein schematischer Aufbau eines erfindungsgemäßen Bremssystems 1 für ein Schienenfahrzeug in einer ersten Ausführungsform gezeigt. Das Bremssystem 1 weist eine Steuerungseinheit 2 und zwei der Steuerungseinheit 2 zugeordnete Bremsen 3 zum Erzeugen einer Verzögerung des Schienenfahrzeugs auf. Die Bremsen 3 werden durch die Steuerungseinheit 2 angesteuert. Alternativ kann nur eine Bremse 3 oder können mehr als zwei Bremsen 3 der Steuerungseinheit 2 zugeordnet sein.

Die Steuerungseinheit 2 weist einen Druckregler 4 auf, der zwei Magnetventile 5', 5" und einen Drucksensor 6 enthält. Ferner ist ein Druckübersetzer 7 in der Steuerungseinheit 2 vorgesehen. Der Druckregler 4 und der Druckübersetzer 7 sind durch einen Fluidleitungsabschnitt 8, der durch den Druckregler 4 und den Druckübersetzer 7 absperrbar ist, verbunden, wodurch eine fluidtechnische Speichereinrichtung für eine Speicherung eines vorbestimmten Fluiddrucks gebildet wird. Der vorbestimmte Fluiddruck wird in Abhängigkeit von Einflussgrößen auf die Verzögerung des Schienenfahrzeugs, insbesondere bremsenspezifischen Einflussgrößen, als nominaler Vorsteuerdruck eingestellt.

Durch den Drucksensor 6 wird der nominale Vorsteuerdruck erfasst, so dass es möglich ist, den nominalen Vorsteuerdruck in Abhängigkeit von den Einflussgrößen nicht nur zu steuern, sondern zu regeln. In alternativen Ausführungsformen ist der Drucksensor 6 nicht zwingend erforderlich, wobei der nominale Vorsteuerdruck in Abhängigkeit von den Einflussgrößen dann nur gesteuert wird.

Das an dem absperrbaren Fluidleitungsabschnitt 8 angrenzende Magnetventil 5' und der Druckübersetzer 7 sind so ausgeführt und angeschlossen, dass bei einem Wegfall eines Ansteuerungssignals kein Durchgang für ein in dem absperrbaren Fluidleitungsabschnitt 8 enthaltenes Fluid möglich ist, so dass der nominale Vorsteuerdruck beispielsweise bei einem Stromausfall gespeichert bleibt. Dadurch werden die Einflussgrößen, insbesondere eine bremsenspezifische Einflussgröße, robust gespeichert. Alternativ ist auch eine Anordnung von anderen Bauteilen möglich, solange gewährleistet ist, dass der nominale Vorsteuerdruck in dem Fluidleitungsabschnitt 8 bei einem Wegfall des Ansteuerungssignals gespeichert bleibt.

Der Druckübersetzer 7 übersetzt den in Abhängigkeit von den Einflussgrößen gespeicherten nominalen Vorsteuerdruck in einen nominalen Bremszylinderdruck. Über diesen nominalen Bremszylinderdruck ist es möglich, die zugeordneten Bremsen 3 basierend auf den Einflussgrößen anzusteuern. Der nominale Bremszylinderdruck ist ein maximaler Bremszylinderdruck, mit dem die Bremsen 3 angesteuert werden können.

In dem Bremssystem 1 sind Bremsdruckregler 9 in einer Verbindungsleitung zwischen dem Druckübersetzer 7 und den zugeordneten Bremsen 3 vorgesehen. Die Bremsdruckregler 9 werden entsprechend einer Bremsanforderung angesteuert und regeln den von dem Druckübersetzer 7 bereitgestellten nominalen Bremszylinderdruck in einen von der Bremsanforderung abhängigen erforderlichen Bremszylinderdruck, mit dem die jeweiligen Bremsen 3 angesteuert werden. Die Bremsdruckregler 9 sind so ausgeführt und angeschlossen, dass bei einem Wegfall eines Ansteuerungssignals ein Durchgang für ein Fluid in der Verbindungsleitung möglich ist, so dass die Bremsen mit dem nominalen Bremszylinderdruck angesteuert werden.

Die Bremsen 3 haben bauartbedingt jeweils einen geschwindigkeitsabhängigen Reibungskoeffizientenverlauf. Dieser geschwindigkeitsabhängige Reibungskoeffizientenverlauf wird als einer der bremsenspezifischen Einflussfaktoren für das Einstellen des nominalen Vorsteuerdrucks verwendet. Alternativ ist es nicht zwingend erforderlich, den Reibungskoeffizientenverlauf als bremsenspezifischen Einflussfaktor zu berücksichtigen, wobei beispielsweise ein Wirkungsgrad der Bremsenmechanik als bremsenspezifischer Einflussfaktor verwendet wird.

Das Bremssystem 1 weist eine Reibungskoeffizientenerfassungseinrichtung 12, beispielsweise ein Drehmomentsensor mit einer Auswerteeinheit, zur Erfassung eines aktuellen geschwindigkeitsabhängigen Reibungskoeffizienten auf. Die Reibungskoeffizientenerfassungseinrichtung 12 ist über einen Signaleingang 10 mit der Steuerungseinheit 2 verbunden, um der Steuerungseinheit 2 die geschwindigkeitsabhängigen Reibungskoeffizienten für eine weitere Verarbeitung und Speicherung zur Verfügung zu stellen. Die geschwindigkeitsabhängigen Reibungskoeffizienten für den geschwindigkeitsabhängigen Reibungskoeffizientenverlauf können über eine Erfassung bei der Inbetriebnahme oder bei Zulassungsfahrten des Schienenfahrzeugs bestimmt werden. In der vorliegen Ausführungsform mit der Reibungskoeffizientenerfassungseinrichtung 12 können die geschwindigkeitsabhängigen Reibungskoeffizienten während der Fahrt des Schienenfahrzeugs, beispielsweise bei Servicebremsungen, erfasst werden.

Die Steuerungseinheit 2 weist ferner einen Signaleingang 11 auf. Der Signaleingang 11 ist mit einem Erfassungsmittel zum Erfassen eines Beladungszustands des Schienenfahrzeugs verbunden. Über den Signaleingang 11 kann ein in Abhängigkeit von dem Beladungszustand des Schienenfahrzeugs erzeugtes Lastsignal, das beispielsweise ein Gewicht eines Abschnitts des Schienenfahrzeugs, beispielsweise eines Wagenkastens und der darin befindlichen Passagiere, darstellt, eingegeben werden. Die Steuerungseinheit 2 berücksichtigt das Lastsignal als einen lastspezifischen Einflussfaktor bei der Bestimmung des nominalen Vorsteuerdrucks, so dass die Bremsen 3 auch in Abhängigkeit von einem Ausmaß der Last angesteuert werden.

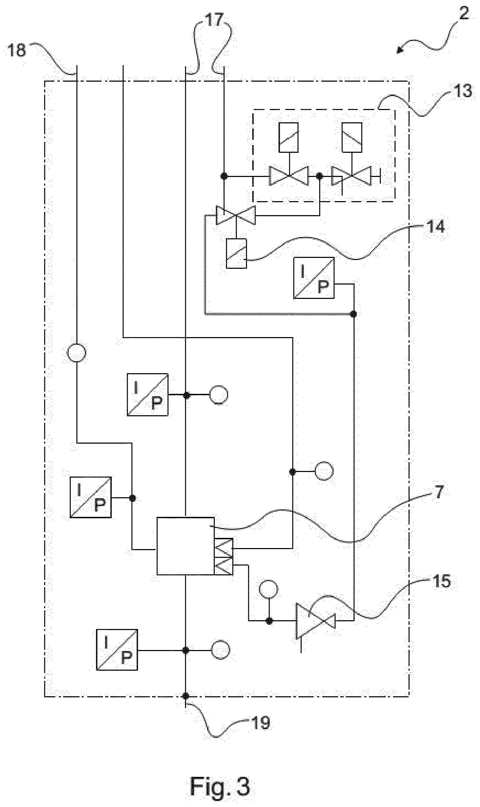

In **Fig. 3** ist ein schematischer Aufbau einer Steuerungseinheit 2 eines erfindungsgemäßen Bremssystems in einer zweiten Ausführungsform gezeigt. Das Bremssystem gemäß der zweiten Ausführungsform unterscheidet sich von dem Bremssystem gemäß der ersten Ausführungsform unter anderem dadurch, dass die Steuerungseinheit 2 eine mechanische Speichereinrichtung aufweist. Verbleibende erfindungswesentliche Teile und Funktionen des Bremssystems sind vergleichbar und werden deshalb nicht erneut beschrieben.

Die Steuerungseinheit 2 der zweiten Ausführungsform des Bremssystems 1 weist einen Druckregler 13 zum Einstellen eines Versorgungsdrucks für die Servicebremsungen auf. Ferner sind in der Steuerungseinheit 2 ein Umschaltventil 14, das unter Umgehung des Druckreglers 13 einen Versorgungsdruck für eine Notbremsung bereitstellen kann, und ein Druckminderventil 15 vorgesehen. Das Druckminderventil 15 reduziert den Versorgungsdruck auf einen maximal zulässigen Notbremsdruck.

Die Steuerungseinheit 2 weist ferner den Druckübersetzer 7 zum Übersetzen des Vorsteuerdrucks bzw. des maximal zulässigen Notbremsdrucks in den nominalen Bremszylinderdruck auf, der dann wie in dem Bremssystem 1 der ersten Ausführungsform weiterverarbeitet wird.

In Fig. 3 ist außerdem gezeigt, dass die Steuerungseinheit 2 Versorgungsdruckanschlüsse 17, einen Lastdruckanschluss 18 und einen Bremszylinderdruckanschluss 19 aufweist. Einer der Versorgungsdruckanschlüsse 17 ist parallel mit dem Druckregler 13 und dem Umschaltventil 14 verbunden, um, wie oben erwähnt, daraus einen Vorsteuerdruck bereitzustellen. Der andere der Versorgungsdruckanschlüsse 17 ist mit dem Druckübersetzer 7 verbunden, um darin in den nominalen Bremszylinderdruck übersetzt zu werden, der über den Bremszylinderdruckanschluss 19 zu den Bremsen weitergeleitet wird.

Der Lastdruckanschluss 18 ist in der Steuerungseinheit 2 mit dem Druckübersetzer 7 verbunden. Die andere Seite des Lastdruckanschlusses 18 ist außerhalb der Steuerungseinheit 2 einer Luftfederung des Schienenfahrzeugs verbunden, so dass über einen in die Steuerungseinheit 2 eingeleiteten Luftdruck die lastspezifische Einflussgröße erfasst und verarbeitet werden kann.

Der Druckübersetzer 7 in dieser Ausführungsform des Bremssystems 1 weist eine auf einem Prinzip eines Waagebalkensystems 21 funktionierende mechanisch einstellbare Druckregeleinheit 16 mit einer mechanischen Speichereinrichtung auf.

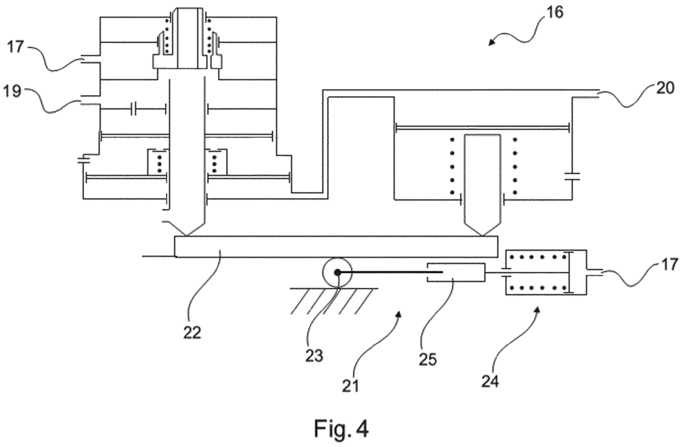

**Fig. 4** zeigt eine schematische Darstellung eines Beispiels für die mechanisch einstellbare Druckregeleinheit 16 mit der mechanischen Speichereinrichtung.

Die Druckregeleinheit 16 ist mit dem Versorgungsdruckanschluss 17 und dem Bremszylinderdruckanschluss 19 verbunden. Ferner ist die Druckregeleinheit 16 mit einem Vorsteuerdruckanschluss 20 verbunden, durch den, wie oben erwähnt, der Vorsteuerdruck bzw. der maximale Notbremsdruck zur Verfügung gestellt wird.

Das Waagebalkensystem 21 wird nun prinzipiell erläutert. Das Waagebalkensystem 21 weist einen Waagebalken 22 auf, der um einen Drehpunkt 23 schwenkbar ist. An den beiden Enden des Waagebalkens 22 greift jeweils ein Stößel an, der auf den Waagebalken 22 drückt. Einer der Stößel drückt mit einer auf dem Vorsteuerdruck basierenden Kraft auf den Waagebalken 22 und der andere der Stößel drückt mit einer auf dem Versorgungsdruck basierenden Kraft und steuert den Bremszylinderdruck. Der Drehpunkt 23 ist entlang des Waagebalkens 22 verschiebbar, so das Verhältnis der Hebelarme der beiden Stößel veränderbar ist. Somit kann ein Ausmaß eines Einflusses des Vorsteuerdrucks auf den Bremszylinderdruck eingestellt werden.

Der Einfluss des Vorsteuerdrucks wird nun wiederum auf der Basis der Einflussgrößen, nämlich der bremsenspezifischen Einflussgröße und der lastspezifischen Einflussgröße robust gespeichert. Alternativ ist es nicht erforderlich, das die beiden Einflussgrößen gespeichert werden, es besteht auch die Möglichkeit, dass nur eine der Einflussgrößen oder auch eine andere Einflussgröße gespeichert wird.

Zum Speichern der bremsenspezifischen Einflussgröße ist eine schematisch dargestellte elektrische Lineareinheit 25 vorgesehen, die mit der Kolbenstange eines Lastzylinders 24 verbunden ist. Die elektrische Lineareinheit 25 weist als ein mechanisches Stellglied eine Spindel auf, die mit dem Drehpunkt 23 verbunden ist und die eine auf der bremsenspezifischen Einflussgröße beruhende Stellung einnimmt. Die elektrische Lineareinheit 25 wird hier basierend auf dem Reibungskoeffizientenverlauf der Bremsen 3 angesteuert, so dass sich die Stellung des mechanischen Stellglieds und somit des Drehpunkts 23 verändert. Damit verändert sich auch das Ausmaß des Einflusses des Vorsteuerdrucks auf den Bremszylinderdruck, so dass die Bremsen basierend auf der Stellung des mechanischen Stellglieds angesteuert werden. Bei einem Stromausfall wird die Lineareinheit 25 nicht mehr mit Strom versorgt und die Stellung des mechanischen Stellglieds bleibt unverändert, wodurch die bremsenspezifische Einflussgröße robust gespeichert wird.

Die lastspezifische Einflussgröße wird mit Hilfe des Lastzylinders 24 gespeichert. Der aktuelle Druck der Luftfederung wirkt auf einen Kolben des Lastzylinders 24, der einfach wirkend ist, so dass sich der Drehpunkt 23 über eine Kolbenstange als ein mechanisches Stellglied entsprechend dem Ausmaß der Last verstellt und eine auf der lastspezifischen Einflussgröße beruhende Stellung einnimmt. Da hier keine elektrischen Bauteile im Einsatz sind, verändert sich die Stellung bei einem Stromausfall nicht. Somit lässt sich der Einfluss der Last auch bei einem Stromausfall robust speichern und die Bremse wird basierend auf der Stellung des mechanischen Stellglieds angesteuert.

Die Speichereinrichtungen sind in alternativen Ausführungsformen nicht auf die elektrische Lineareinheit 25 für die bremsenspezifische Einflussgröße und den Lastzylinder 24 für lastspezifische Einflussgröße beschränkt. Es besteht die Möglichkeit, dass beispielsweise Lastzylinder für sowohl die lastspezifische als auch die bremsenspezifische Einflussgröße verwendet werden. Andererseits besteht alternativ auch die Möglichkeit, dass elektrische Lineareinheiten für die beiden Einflussgrößen verwendet werden, wobei dann auch das Lastsignal in ein elektrisches Signal umgewandelt wird, das dann über die Stellung des Stellglieds der elektrischen Lineareinheit gespeichert wird. Ebenfalls sind die Speichereinrichtungen nicht auf die elektrische Lineareinheit 25 und einen Fluidzylinder beschränkt, sondern andere Aktoren, die das Einstellen der vorbestimmten Stellung des mechanischen Stellglieds ermöglichen, können verwendet werden.

Im Betrieb wird eine bremsenspezifische Einflussgröße zum Ansteuern der Bremsen in dem Bremssystem erfasst. Dies erfolgt entweder bei der Inbetriebnahme des Schienenfahrzeugs oder bei Zulassungsfahrten. In Bremssystemen, die die Reibungskoeffizientenerfassungseinrichtung 12 aufweisen, kann die Erfassung des Reibungskoeffizientenverlaufs auch während des Betriebs erfolgen, wobei andere Einflussfaktoren, beispielsweise der Wirkungsgrad der Bremsenmechanik über entsprechende Einrichtungen ebenfalls während des Betriebs oder auch nur bei der Inbetriebnahme oder den Zulassungsfahrten erfasst werden. Die bremsenspezifische Einflussgröße wird robust in der Speichereinrichtung der Steuerungseinheit der jeweiligen Bremsen, beispielsweise also in der mechanischen oder in der fluidtechnischen Speichereinheit gespeichert, und bleibt also auch bei einem Stromausfall erhalten.

Bei einem Vorliegen eines Notbremssignals oder bei einem Stromausfall in dem Bremssystem werden die Bremsen mit einem nominalen Bremszylinderdruck angesteuert, der basierend auf der gespeicherten bremsenspezifischen Einflussgröße übersetzt wird.

Bei einem Vorliegen eines Servicebremssignals werden die Bremsen mit einem Bremszylinderdruck, der ein in Abhängigkeit von der Bremsenanforderung modifizierter nominaler Bremszylinderdruck ist, angesteuert. Hierbei ist auch gewährleistet, dass eine Haftwertausnutzung für die einzelne Bremse nicht überschritten wird.

Die bremsenspezifische Einflussgröße, die den geschwindigkeitsabhängigen Reibungskoeffizientenverlauf mit den vorbestimmten geschwindigkeitsabhängigen Reibungskoeffizienten enthalten kann, wird periodisch gespeichert, um möglichst aktuelle Werte zur Verfügung zu haben. Alternativ wird die bremsenspezifische Einflussgröße nur einmal, beispielsweise während der Inbetriebnahme oder der Zulassungsfahrt, erfasst und gespeichert.

Die bremsenspezifische Einflussgröße und die lastspezifische Einflussgröße werden als Einflussgröße in Abhängigkeit von einem Ausmaß einer Last aufgrund eines Gewichts des Schienenfahrzeugs überlagert und in Abhängigkeit von den überlagerten Einflussfaktoren robust gespeichert.

Beim Vorliegen der pneumatischen Speichereinrichtung wird die Einflussgröße durch das Einsperren des vorbestimmten Fluiddrucks in Abhängigkeit von der Einflussgröße in dem absperrbaren Fluidleitungsabschnitt robust gespeichert und der nominale Bremszylinderdruck wird basierend auf dem in dem absperrbaren Fluidleitungsabschnitt eingesperrten Fluiddruck übersetzt.

Beim Vorliegen der mechanischen Speichereinrichtung wird die Einflussgröße durch das Einstellen der auf der Einflussgröße beruhenden vorbestimmten Stellung des Stellglieds robust gespeichert und der nominale Bremszylinderdruck wird basierend auf der Stellung des mechanischen Stellglieds durch eine mechanisch einstellbare Druckregeleinheit übersetzt.

Insbesondere bei einem Vorsehen der Erfassungseinheit zur Erfassung des aktuellen geschwindigkeitsabhängigen Reibungskoeffizienten werden die aktuellen geschwindigkeitsabhängigen Reibungskoeffizienten der Bremse als die vorbestimmten geschwindigkeitsabhängigen Reibungskoeffizienten erfasst, wobei, wenn mehrere Bremsen oder Bremsengruppen vorhanden sind, der aktuelle Reibungskoeffizient für eine einzelne der Bremsen oder der Bremsengruppen erfasst wird.

### BEZUGSZEICHENLISTE

- 1: Bremssystem
- 2: Steuerungseinheit
- 3: Bremse
- 4: Druckregler
- 5: Magnetventil
- 6: Drucksensor
- 7: Druckübersetzer
- 8: absperrbarer Fluidleitungsabschnitt
- 9: Bremsdruckregler
- 10: Signaleingang
- 11: Signaleingang
- 12: Reibungskoeffizientenerfassungseinrichtung
- 13: Druckregler
- 14: Umschaltventil
- 15: Druckminderventil
- 16: Druckregeleinheit
- 17: Versorgungsdruckanschluss
- 18: Lastdruckanschluss
- 19: Bremszylinderdruckanschluss
- 20: Vorsteuerdruckanschluss
- 21: Waagebalkensystem
- 22: Waagebalken
- 23: Drehpunkt
- 24: Lastzylinder
- 25: Lineareinheit

## Patentansprüche

1. Bremssystem (1) für ein Schienenfahrzeug, aufweisend
mindestens eine Bremse (3) zum Erzeugen einer Verzögerung des Schienenfahrzeugs, und
mindestens eine Steuerungseinheit (2) zum Ansteuern der mindestens einen Bremse, wobei die mindestens eine Bremse der Steuerungseinheit (2) zugeordnet ist,
wobei
die Steuerungseinheit (2) eine Speichereinrichtung aufweist, die ausgebildet ist, eine bremsenspezifische Einflussgröße als Einflussgröße auf die Verzögerung robust i zu speichern, und
die Steuerungseinheit (2) ausgebildet ist, die mindestens eine zugeordnete Bremse (3) basierend auf der bremsenspezifischen Einflussgröße anzusteuern,
die Speichereinrichtung einen absperrbaren Fluidleitungsabschnitt (8) aufweist, der so absperrbar ist, dass ein Fluid mit einem auf der bremsenspezifische Einflussgröße basierenden nominalen Vorsteuerdruck in dem Fluidleitungsabschnitt (8) einsperrbar ist, wobei das Bremssystem (1) ausgebildet ist, die mindestens eine zugeordnete Bremse (3) basierend auf dem nominalen Vorsteuerdruck anzusteuern,
der absperrbare Fluidleitungsabschnitt (8) mit einem Druckübersetzer (7) verbunden ist, der ausgebildet ist, den nominalen Vorsteuerdruck in einen nominalen Bremszylinderdruck zu übersetzen, und
das Bremssystem (1) in einer Verbindungsleitung zwischen dem Druckübersetzer (7) und der zugeordneten mindestens einen Bremse (3) einen Bremsdruckregler (9) aufweist, der den nominalen Bremszylinderdruck in einen erforderlichen Bremszylinderdruck umwandelt, und der Bremsdruckregler (9) ausgebildet ist, die mindestens eine Bremse (3) bei einem Vorliegen eines Notbremssignals oder eines Stromausfalls in dem Bremssystem (1) mit dem nominalen Bremszylinderdruck anzusteuern.

2. Bremssystem (1) gemäß Anspruch 1, wobei I
ein Drucksensor (6) in dem absperrbaren Fluidleitungsabschnitt (8) vorgesehen ist.

3. Bremssystem (1) für ein Schienenfahrzeug, aufweisend
mindestens eine Bremse (3) zum Erzeugen einer Verzögerung des Schienenfahrzeugs, und
mindestens eine Steuerungseinheit (2) zum Ansteuern der mindestens einen Bremse, wobei die mindestens eine Bremse der Steuerungseinheit (2) zugeordnet ist,
wobei
die Steuerungseinheit (2) eine Speichereinrichtung aufweist, die ausgebildet ist, eine bremsenspezifische Einflussgröße als Einflussgröße auf die Verzögerung robust zu speichern, und
die Steuerungseinheit (2) ausgebildet ist, die mindestens eine zugeordnete Bremse (3) basierend auf der bremsenspezifischen Einflussgröße anzusteuern,
wobei
die Speichereinrichtung ein mechanisches Stellglied aufweist, das ausgebildet ist, eine auf der bremsenspezifischen Einflussgröße beruhende Stellung einzunehmen, und
die Steuerungseinheit (2) eine mechanisch einstellbare Druckregeleinheit (16) mit dem mechanischen Stellglied und einen Druckübersetzer (7) zum Übersetzen eines nominalen Bremszylinderdrucks basierend auf der Stellung des mechanischen Stellglieds aufweist, wobei
das Bremssystem (1) ausgebildet ist, die zugeordnete Bremse (3) basierend auf der Stellung des mechanischen Stellglieds anzusteuern.

4. Bremssystem (1) gemäß Anspruch 3, wobei
die mechanisch einstellbare Druckregeleinheit (16) ausgebildet ist, auf dem Prinzip eines Waagebalkensystems (21) zu funktionieren.

5. Bremssystem (1) gemäß einem der vorangehenden Ansprüche, wobei
das Bremssystem (1) einen Signaleingang (10) aufweist, über den ein Ausmaß einer Last aufgrund eines Gewichts eines Abschnitts des Schienenfahrzeugs in das Bremssystem (1) eingebbar ist, wobei das Bremssystem (1) ausgebildet ist, das Ausmaß der Last in der Speichereinrichtung zu speichern und die mindestens eine Bremse (3) auch in Abhängigkeit von dem Ausmaß der Last anzusteuern.

6. Bremssystem (1) gemäß einem der vorangehenden Ansprüche, wobei
die mindestens eine Bremse (3) einen geschwindigkeitsabhängigen Reibungskoeffizientenverlauf (II', II") mit vorbestimmten Reibungskoeffizienten hat, und
die bremsenspezifische Einflussgröße eine auf dem geschwindigkeitsabhängigen Reibungskoeffizientenverlauf (II', II") basierende Einflussgröße enthält.

7. Bremssystem (1) gemäß Anspruch 6, wobei
mehrere Bremsen (3) mit jeweils einem geschwindigkeitsabhängigen Reibungskoeffizientenverlauf (II', II"), und
mehrere Steuerungseinheiten (2), die jeweils mindestens einer der Bremsen (3) zugeordnet sind, vorgesehen sind.

8. Bremssystem (1) gemäß Anspruch 6 oder 7, wobei
das Bremssystem (1) eine Reibungskoeffizientenerfassungseinrichtung (12) zur Erfassung eines aktuellen geschwindigkeitsabhängigen Reibungskoeffizienten der Bremse(n) (3) als einen der vorbestimmten Reibungskoeffizienten aufweist.

9. Verfahren zum Ansteuern einer Bremse (3) in einem Bremssystem eines Schienenfahrzeugs gemäss Anspruch 3 mit den Schritten:
Robustes Speichern einer bremsenspezifischen Einflussgröße als Einflussgröße auf eine Verzögerung des Schienenfahrzeugs in einer Speichereinrichtung einer der Bremse (3) zugeordneten Steuerungseinheit (2);
Ansteuern der Bremse (3) mit einem auf der gespeicherten bremsenspezifischen Einflussgröße basierenden übersetzten nominalen Bremszylinderdruck, wenn ein Notbremssignal oder ein Stromausfall in dem Bremssystem (1) vorliegt; und
Ansteuern der Bremse (3) mit einem Bremszylinderdruck, der ein in Abhängigkeit von einer Bremsanforderung modifizierter nominaler Bremszylinderdruck ist, wenn ein Servicebremssignal vorliegt, wobei
das robuste Speichern der Einflussgröße durch ein Einstellen einer auf der Einflussgröße beruhenden vorbestimmten Stellung eines Stellglieds erfolgt; und
der nominale Bremszylinderdruck basierend auf der Stellung des mechanischen Stellglieds durch eine mechanisch einstellbare Druckregeleinheit (16) übersetzt wird.

10. Verfahren gemäß Anspruch 9, wobei
das Speichern der bremsenspezifischen Einflussgröße periodisch erfolgt.

11. Verfahren gemäß Anspruch 9 oder 10 mit dem zusätzlichen Schritt:
Robustes Speichen der Einflussgröße durch Überlagern einer lastspezifischen Einflussgröße in Abhängigkeit von einem Ausmaß einer Last aufgrund eines Gewichts des Schienenfahrzeugs und der bremsenspezifischen Einflussgröße .

12. Verfahren gemäß einem der Ansprüche 9 bis 11, wobei
das robuste Speichern der Einflussgröße durch ein Einsperren eines vorbestimmten Fluiddrucks als nominalen Vorsteuerdruck in Abhängigkeit von der Einflussgröße in einem absperrbaren Fluidleitungsabschnitt (8) erfolgt; und
der nominale Bremszylinderdruck basierend auf dem in dem absperrbaren Fluidleitungsabschnitt eingesperrten Fluiddruck übersetzt wird.

13. Verfahren gemäß einem der Ansprüche 9 bis 12, wobei die bremsenspezifische Einflussgröße einen geschwindigkeitsabhängiger Reibungskoeffizientenverlauf mit vorbestimmten geschwindigkeitsabhängigen Reibungskoeffizienten enthält.

14. Verfahren gemäß Anspruch 13 mit dem zusätzlichen Schritt:
Erfassen von aktuellen geschwindigkeitsabhängigen Reibungskoeffizienten der Bremse als die vorbestimmten geschwindigkeitsabhängigen Reibungskoeffizienten.

15. Verfahren gemäß einem der Ansprüche 9 bis 14, wobei
mehrere Bremsen (3) oder Bremsengruppen vorhanden sind, und der aktuelle Reibungskoeffizient für eine einzelne der Bremsen oder eine einzelne der Bremsengruppen erfasst wird.

## Claims

1. A braking system (1) for a rail vehicle, having:
at least one brake (3) for effecting a deceleration of the rail vehicle, and
at least one control unit (2) for actuating the at least one brake, this at least one brake being assigned to the control unit (2),
the control unit (2) having a storage device that is configured to store robustly a braking-specific influencing variable as an influencing variable on the deceleration, and
the control unit (2) being configured to actuate the at least one assigned brake (3) based on the braking-specific influencing variable,
the storage device having a fluid line portion (8) capable of being shut off that can be shut off in such a way that a fluid with a nominal pilot pressure based on the braking-specific influencing variable can be confined to the fluid line portion (8), the braking system being configured to actuate the at least one assigned brake (3) based on the nominal pilot pressure,
the fluid line portion (8) that is capable of being shut off being connected to a pressure intensifier (7) that is configured to intensify the nominal pilot pressure to a nominal brake cylinder pressure, and
the brake system (1) having in a connecting line between the pressure intensifier and the assigned at least one brake (3) a brake pressure regulator (9) that converts the nominal brake cylinder pressure into a required brake cylinder pressure, and the brake pressure regulator (9) being configured to actuate the at least one brake (3) with the nominal brake cylinder pressure in the presence of an emergency braking signal or a power failure in the braking system (1).

2. A braking system (1) according to claim 1,
a pressure sensor (6) being provided in the fluid line portion (8) that is capable of being shut off.

3. A braking system (1) for a rail vehicle, having:
at least one brake (3) for effecting a deceleration of the rail vehicle and
at least one control unit (2) for actuating the at least one brake, this at least one brake being assigned to the control unit (2),
the control unit (2) having a storage device that is configured to store robustly a braking-specific influencing variable as an influencing variable on the deceleration, and
the control unit (2) being configured to actuate the at least one assigned brake (3) based on the braking-specific influencing variable,
the storage device having a mechanical actuator that is configured to adopt a position based on the braking-specific influencing variable, and
the control unit (2) having a mechanically adjustable pressure regulation unit (16) comprising the mechanical actuator, and a pressure intensifier (7) for intensifying a nominal brake cylinder pressure based on the position of the mechanical actuator,
the braking system (1) being configured to actuate the assigned brake (3) based on the position of the mechanical actuator.

4. A braking system (1) according to claim 3,
the mechanically adjustable pressure regulator unit (16) being configured to function on the principle of a balance arm (21).

5. A braking system (1) according to any one of the preceding claims,
the braking system (1) having a signal input (10) via which it is possible to input into the braking system (1) a magnitude of a load due to a weight of a portion of the rail vehicle, the braking system (1) being configured to store the magnitude of the load in the storage device and also to actuate the at least one brake (3) dependent on the magnitude of the load.

6. A braking system (1) according to any one of the preceding claims,
the at least one brake (3) having a speed-dependent coefficient of friction curve (II' II") with predetermined coefficients of friction, and
the braking-specific influencing value containing an influencing value based on the speed-dependent coefficient of friction curve (II' II").

7. A braking system (1) according to claim 6,
there being provided a plurality of brakes (3), each with a speed-dependent coefficient of friction curve (II' II"), and
a plurality of control units (2), each of which is assigned to at least one of the brakes (3).

8. A braking system (1) according to claim 6 or 7,
the braking system (1) having a coefficient of friction detection device (12) for detecting a current speed-dependent coefficient of friction of the brake or brakes (3) as one of the predetermined coefficients of friction.

9. A method for actuating a brake (3) in a braking system of a rail vehicle according to claim 3, comprising the following steps:
the robust storage in a storage device of a control unit (2) assigned to one of the brakes (3) of a braking-specific influencing variable as an influencing variable on a deceleration of the rail vehicle;
the actuation of the brake (3) with an intensified nominal brake cylinder pressure based on the stored braking-specific influencing variable in the presence of an emergency braking signal or a power failure in the braking system (1); and
the actuation of the brake (3) with a brake cylinder pressure that is a nominal brake cylinder pressure modified dependent on a braking request when a service braking signal is present,
the robust storage of the influencing variable being effected by adjusting a predetermined position of an actuator based on the influencing variable; and
the nominal brake cylinder pressure being intensified by a mechanically adjustable pressure regulation unit (16) based on the position of the mechanical actuator.

10. A method according to claim 9,
the storage of the braking-specific influencing variable taking place periodically.

11. A method according to claim 9 or 10, having the following additional step:
the robust storage of the influencing variable by overlaying a load-specific influencing variable dependent on a magnitude of a load due to a weight of the rail vehicle and the braking-specific influencing variable.

12. A method according to any one of claims 9 to 11,
the robust storage of the influencing variable being effected by confining a predetermined fluid pressure as the nominal pilot pressure in a fluid line portion (8) that is capable of being shut off dependent on the influencing variable; and
the nominal brake cylinder pressure being intensified based on the fluid pressure confined in the fluid line portion that is capable of being shut off.

13. A method according to any one of claims 9 to 12,
the braking-specific influencing variable containing a speed-dependent coefficient of friction curve with predetermined speed-dependent coefficients of friction.

14. A method according to claim 13, having the following additional step:
the detection of current speed-dependent coefficients of friction of the brake as the predetermined speed-dependent coefficients of friction.

15. A method according to any one of claims 9 to 14,
a plurality of brakes (3) or groups of brakes being present, and the current coefficient of friction being detected for any single one of these brakes or any single one of these groups of brakes.

## Revendications

1. Système (1) de freinage d'un véhicule ferroviaire, comportant
au moins un frein (3) de production d'une décélération du véhicule ferroviaire, et
au moins une unité (2) de commande pour la commande du au moins un frein, dans lequel le au moins un frein est associé à l'unité (2) de commande,
dans lequel
l'unité (2) de commande a un dispositif de mémoire, qui est constitué pour mettre en mémoire de manière robuste une grandeur d'influence spécifique au freinage comme grandeur d'influence sur la décélération, et
l'unité (2) de commande est constituée pour commander le au moins un frein (3) associé sur la base de la grandeur d'influence spécifique au freinage,
le dispositif de mémoire a un tronçon (8) de conduite de fluide pouvant être fermé, qui peut être fermé de manière à ce qu'un fluide ayant une pression pilote nominale reposant sur la grandeur d'influence spécifique au freinage puisse entrer dans le tronçon (8) de conduite de fluide, dans lequel le système (1) de freinage est constitué pour commander le au moins un frein (3) associé sur la base de la pression pilote nominale,
le tronçon (8) de conduite de fluide pouvant être fermé communique avec un multiplicateur (7) de la pression, qui est constitué pour multiplier la pression nominale pilote en une pression nominale de cylindre de frein, et
le système (1) de freinage a, dans un conduit de communication entre le multiplicateur (7) de pression et le au moins un frein (3) associé, un régleur (9) de la pression de freinage, qui transforme la pression nominale de cylindre de frein en une pression nécessaire de cylindre de frein, et le régleur (9) de pression de freinage est constitué pour commander le au moins un frein (3), en présence d'un signal de freinage d'urgence ou d'une panne de courant dans le système (1) de freinage, par la pression nominale de cylindre de frein.

2. Système (1) de freinage suivant la revendication 1, dans lequel
il est prévu un capteur (6) de pression dans le tronçon (8) de conduite de fluide pouvant être fermé.

3. Système (1) de freinage d'un véhicule ferroviaire, comportant
au moins un frein (3) de production d'une décélération du véhicule ferroviaire, et
au moins une unité (2) de commande pour la commande du au moins un frein, dans lequel le au moins un frein est associé à l'unité (2) de commande,
dans lequel
l'unité (2) de commande a un dispositif de mémoire, qui est constitué pour mettre en mémoire de manière robuste une grandeur d'influence spécifique au freinage comme grandeur d'influence sur la décélération, et
l'unité (2) de commande est constituée pour commander le au moins un frein (3) associé sur la base de la grandeur d'influence spécifique au freinage,
dans lequel
le dispositif de mémoire a un actionneur mécanique, qui est constitué pour prendre une position reposant sur la grandeur d'influence spécifique au freinage, et
l'unité (2) de commande a une unité (16) de régulation de la pression réglable mécaniquement et ayant l'actionneur mécanique et un multiplicateur (7) de pression pour multiplier une pression nominale de cylindre de frein sur la base de la position de l'actionneur mécanique, dans lequel
le système (1) de freinage est constitué pour commander le frein (3) associé sur la base de la position de l'actionneur mécanique.

4. Système (1) de freinage suivant la revendication 3, dans lequel
l'unité (16) de réglage de la pression réglable mécaniquement est constitué pour fonctionner sur le principe d'un système (21) de bascule.

5. Système (1) de freinage suivant l'une des revendications précédentes, dans lequel
le système (1) de freinage a une entrée (10) de signal, par laquelle une valeur d'une charge peut, sur la base d'un poids d'une partie du véhicule ferroviaire, être entrée dans le système (1) de freinage, dans lequel le système (1) de freinage est constitué pour mettre en mémoire la valeur de la charge dans le dispositif de mémoire et pour commander le au moins un frein (3) également en fonction de la valeur de la charge.

6. Système (1) de freinage suivant l'une des revendications précédentes, dans lequel
le au moins un frein (3) a une courbe (II', II") de coefficients de frottement en fonction de la vitesse ayant des coefficients de frottement déterminés à l'avance, et
la grandeur d'influence spécifique au freinage contient une grandeur d'influence reposant sur la courbe (II', II'') de coefficients de frottement en fonction de la vitesse.

7. Système (1) de freinage suivant la revendication 6, dans lequel
il est prévu plusieurs freins (3) ayant chacun une courbe (II', II") de coefficients de frottement en fonction de la vitesse, et
plusieurs unités (2) de commande, qui chacune sont associées à au moins l'un des freins (3).

8. Système (1) de freinage suivant la revendication 6 ou 7, dans lequel
le système (1) de freinage a un dispositif (12) de détection de coefficients de frottement pour la détection d'un coefficient de frottement en cours en fonction de la vitesse du (des) frein(s) (3) comme l'un des coefficients de frottement déterminés à l'avance.

9. Procédé de commande d'un frein (3) dans un système de freinage d'un véhicule ferroviaire suivant la revendication 3, comprenant les stades :
mise en mémoire robuste d'une grandeur d'influence spécifique au freinage comme grandeur d'influence sur une décélération du véhicule ferroviaire dans un dispositif de mémoire d'une unité (2) de commande associée au frein (3) ;
commande du frein (3) par une pression nominale de cylindre de frein multipliée reposant sur la grandeur d'influence spécifique au freinage mise en mémoire, s'il y a un signal de frein d'urgence ou une panne de courant dans le système (1) de freinage ; et
commande du frein (3) par une pression de cylindre de frein, qui est une pression nominale de cylindre de frein modifiée en fonction d'une demande de freinage, s'il y a un signal de frein de service, dans lequel
la mise en mémoire robuste de la grandeur d'influence s'effectue par un réglage d'une position, déterminée à l'avance et reposant sur la grandeur d'influence, d'un actionneur ; et
la pression nominale de cylindre de frein reposant sur la position de l'actionneur mécanique est multipliée par une unité (16) de réglage de la pression réglable mécaniquement.

10. Procédé suivant la revendication 9, dans lequel
la mise en mémoire de la grandeur d'influence spécifique au freinage a lieu périodiquement.

11. Procédé suivant la revendication 9 ou 10, comprenant le stade supplémentaire :
mise en mémoire robuste de la grandeur d'influence par superposition d'une grandeur d'influence spécifique à la une charge en fonction d'une valeur d'une charge sur la base d'un poids du véhicule ferroviaire et de la grandeur d'influence spécifique au freinage.

12. Procédé suivant l'une des revendications 9 à 11, dans lequel
la mise en mémoire robuste de la grandeur d'influence a lieu par entrée d'une pression de fluide déterminée à l'avance comme pression nominale pilote en fonction de la grandeur d'influence dans un tronçon (8) de conduite de fluide pouvant être fermé ; et
on multiplie la pression nominale de cylindre de frein sur la base de la pression de fluide entrée dans le tronçon de conduite de fluide pouvant être fermée.

13. Procédé suivant l'une des revendications 9 à 12, dans lequel la grandeur d'influence spécifique au freinage contient une courbe de coefficients de frottement en fonction de la vitesse ayant des coefficients de frottement en fonction de la vitesse déterminés à l'avance.

14. Procédé suivant la revendication 13, comprenant un stade supplémentaire :
détection de coefficients de frottement en fonction de la vitesse en cours du frein comme coefficients de frottement en fonction de la vitesse déterminés à l'avance.

15. Procédé suivant l'une des revendications 9 à 14, dans lequel
il y a plusieurs freins (3) ou groupes de freins et on détecte le coefficient de frottement en cours pour un seul des freins ou pour un seul des groupes de freins.
